# DEMANDE DE BREVET EUROPEEN

(11) **EP 1 652 579 A1**
(43) Date de publication de la demande: **03.05.2006**
(21) Numéro de dépôt: 05105852.7
(22) Date de dépôt: 30.06.2005
(51) Int. Cl.: B01J 19/00, B01L 3/00

(54) **Systèmes fluidiques comprenant un capillaire et procédé pour leur fabrication.**

(30) Priorité: 28.10.2004 CH 17842004
(71) Demandeur: CSEM Centre Suisse d'Electronique et de Microtechnique SA Recherche et Développement, 2007 Neuchâtel (CH)
(72) Inventeur: Hug, Thomas, 8700 Küsnacht (CH); Staufer, Urs, 2000 Neuchâtel (CH); Heinzelmann, Harry, 2000 Neuchâtel (CH)
(74) Mandataire: GLN

(57) **Abrégé**

Le procédé de fabrication d'un système fluidique selon l'invention est caractérisé en ce qu'il consiste à:
- réaliser, à la surface d'une première plaquette (1) de silicium, au moins une première gorge (10) de dimensions données,
- réaliser dans une deuxième plaquette (2) de silicium des ouvertures traversantes (21,22),
- réaliser, par fusion, un assemblage (3) desdites première (1) et deuxième (2) plaquettes de manière à former un canal (10) qui est en contact avec lesdites ouvertures traversantes, et
- placer ledit assemblage dans une atmosphère oxydante de façon à former une couche d'oxyde de silicium sur les parois internes dudit canal (10), diminuant ainsi la section de ce dernier pour créer ledit capillaire.

L'invention concerne également les systèmes fluidiques obtenus à l'aide du procédé.

## Description

La présente invention se rapporte, généralement, à un procédé de fabrication de systèmes fluidiques intégrés sur une base en silicium et, plus particulièrement, à un procédé de fabrication de tels systèmes comprenant au moins un capillaire transparent, de dimensions très faibles et, au moins partiellement, libéré du substrat. L'invention se rapporte également aux systèmes fluidiques obtenus par ce procédé.

Les systèmes fluidiques intégrés trouvent de plus en plus d'applications pour le transport, la détection et l'analyse d'échantillons sous forme liquide, tant dans les domaines de la chimie que de la biologie, de la pharmacologie ou encore de la médecine. La miniaturisation de tels systèmes permet de réduire les temps d'analyse, la consommation des échantillons en même temps qu'elle permet l'augmentation du nombre des systèmes sur le même substrat, améliorant ainsi les performances de l'ensemble en termes de coût et de rapidité de mesure. Par ailleurs, la microfabrication de ces systèmes avec les microtechnologies, tels la lithographie et les procédés d'attaque par voie sèche ou humide, offre les avantages, d'une part, d'une précision à l'échelle micronique ou même submicronique et, d'autre part, de permettre l'intégration de détecteurs ou d'autres modules.

Un exemple d'un système fluidique tel que mentionné ci-dessus est l'objet du brevet américain No. 6,477,901. Le système décrit incorpore, au moins, un tube, dont une partie est suspendue au-dessus d'un substrat, et des électrodes pour activer ou contrôler les mouvements de la partie libre du tube. Le brevet divulgue également différentes méthodes de fabrication du tube, lesquelles sont complexes, nécessitent des équipements coûteux et ne sont pas de nature à permettre le contrôle précis des dimensions du tube. Il en résulte que l'obtention d'un tube de section aux dimensions précises souvent inférieures au micron reste difficile, voire impossible. Par ailleurs, les matériaux prévus pour les parois du tube ne sont pas transparents, ce qui constitue un inconvénient pour beaucoup d'applications, telles celles faisant appel à une mesure par voie optique, tout au moins, dans le visible.

La présente invention a donc pour but de pallier les inconvénients mentionnés ci-dessus en proposant un procédé de fabrication d'un système fluidique qui permette la réalisation de systèmes fluidiques comprenant au moins un capillaire de dimensions submicroniques et qui ne nécessite pas des équipements coûteux.

Un autre but de l'invention est un procédé de fabrication d'un système fluidique permettant la réalisation d'un capillaire comportant une portion suspendue et transparente, permettant une mobilité de la portion suspendue et/ou une analyse ou une mesure de son contenu par voie optique.

Encore un autre but de l'invention est un système fluidique comportant un capillaire de dimensions précises, dont une partie au moins peut être suspendue et transparent aux longueurs d'ondes dans le domaine du visible.

Ces buts sont atteints grâce au procédé, tel que défini dans la revendication indépendante. Des étapes de procédé particulièrement avantageuses ainsi que les systèmes qui en résultent font l'objet des revendications dépendantes.

D'autres objets, caractéristiques et avantages de la présente invention apparaîtront à la lecture de la description suivante faite à titre d'exemple non limitatif et en relation avec les dessins annexés dans lesquels:
- la figure 1 représente les différentes étapes conduisant à la fabrication d'un capillaire suspendu;
- la figure 2 montre une vue en perspective d'un système fluidique obtenu selon le procédé de l'invention.

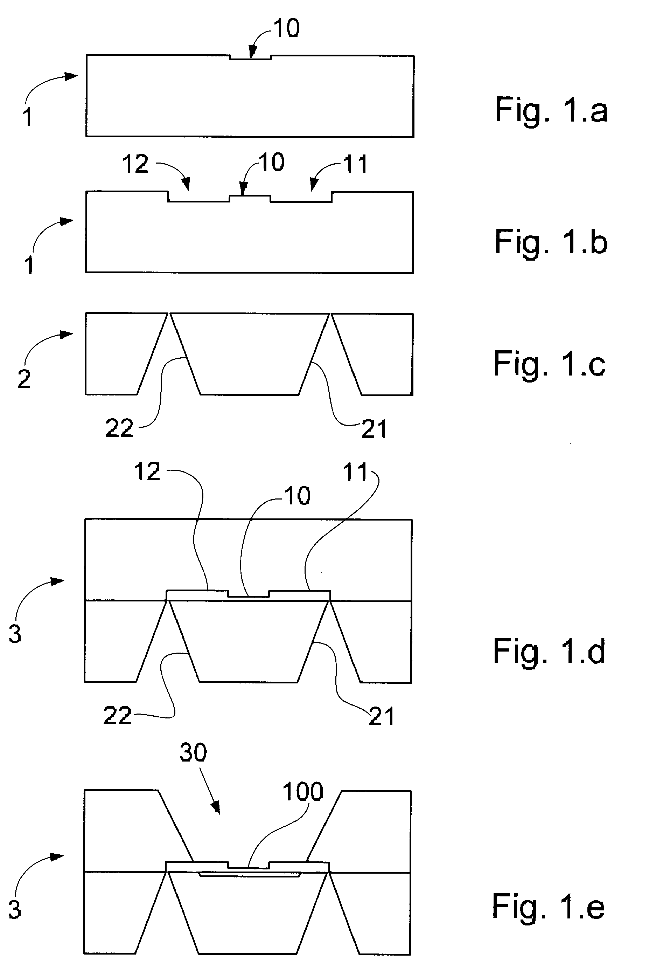

La figure 1 montre les différentes étapes nécessaires à la réalisation, selon les principes de l'invention, d'un système fluidique comprenant au moins un capillaire. La figure 1a représente une plaquette supérieure en silicium 1 (par exemple, d'environ 400 µm d'épaisseur, d'orientation <100> et polie sur les deux faces) sur la face supérieure de laquelle a été réalisée une gorge 10. Cette gorge 10 constituera la base d'un futur capillaire. Elle a, par exemple, une profondeur initiale d'environ 1,5 µm, une largeur de 1,5 à 4,5 µm et une longueur de 100 à 1000 µm ; elle peut, en outre, présenter une forme droite ou plus complexe, telle celle d'un méandre. Une telle structuration fait appel aux techniques classiques de photolithographie et d'attaque, par exemple, par voie sèche selon un procédé appelé DRIE (ou " Deep Reactive Ion Etching "). Comme représenté sur la figure 1 b, des canaux 11 et 12 d'accès au capillaire, lesquels sont des structures de dimensions micrométriques, sont également réalisés sur cette plaquette 1. Pour la réalisation de ces canaux d'accès, on peut faire appel à la photolithographie utilisant un procédé d'attaque par voie humide (par exemple à l'aide de KOH). Un procédé d'attaque par voie sèche, tel que le procédé DRIE, peut également être utilisé.

La figure 1c représente une plaquette inférieure 2, également en silicium et, de préférence, de mêmes caractéristiques (orientation, épaisseur, etc.) que la plaquette supérieure. Cette plaquette est attaquée (par exemple, par voie humide à l'aide de KOH) pour présenter des ouvertures, telle les ouvertures 21 et 22.

Comme représenté à la figure 1d, les plaquettes supérieure 1 et inférieure 2 sont ensuite, par fusion dans une atmosphère oxydante et humide à 1100 °C, assemblées de telle façon que les ouvertures, telles les ouvertures 21 et 22, de la plaquette inférieure 2 soient alignées avec les extrémités correspondantes des canaux d'accès 11 et 12 de la plaquette supérieure 2. En assemblant les plaquettes 1 et 2 pour réaliser l'assemblage 3, sont donc formés les canaux d'accès 11 et 12 et un canal 10 destiné à donner un capillaire. Pendant la fusion, une couche d'oxyde de silicium (SiO₂) se met à croître sur toutes les parties exposées de l'assemblage 3, y compris le système des canaux 10, 11 et 12 qui est accessible via les ouvertures 21 et 22. Cette croissance de l'oxyde a pour effet de réduire la section des canaux d'accès ainsi que celle du canal 10. La section de ce dernier peut ainsi être amenée à des dimensions inférieures au micron, créant ainsi le capillaire recherché. La croissance thermique de l'oxyde est un phénomène bien contrôlé, ce qui permet d'obtenir aisément une valeur précise de la section du capillaire. Comme variante non préférentielle, l'oxydation peut être réalisée dans une atmosphère oxydante mais sèche.

La figure 1e représente l'assemblage 3 de la figure 1d après libération du capillaire 10. Cette libération est obtenue de la manière suivante. L'oxyde de la face supérieure de l'assemblage 3 est structuré (ou attaqué) par photolithographie suivie d'une attaque de type RIE (ou "Reactive Ion Etching"), ce qui délimite une fenêtre 30 dans ladite couche d'oxyde. Ensuite, le silicium est attaqué, à travers cette fenêtre, par exemple une attaque humide à l'aide de KOH. Cette attaque est poursuivie jusqu'à ce que le capillaire 10 soit, au moins sur une portion 100 de sa longueur, libéré; ce qui signifie qu'il est, sur cette portion, suspendu au-dessus du silicium. Comme indiqué plus haut, le capillaire peut présenter des formes variées et l'attaque mentionnée ci-dessus peut être faite de manière à libérer le capillaire sur une partie bien déterminée, celle-ci dépendant de l'application envisagée. On peut également prévoir une fenêtre d'attaque sur la partie inférieure de l'assemblage 3 avec le résultat que la portion 100 du capillaire deviendra accessible par les deux faces supérieure et inférieure.

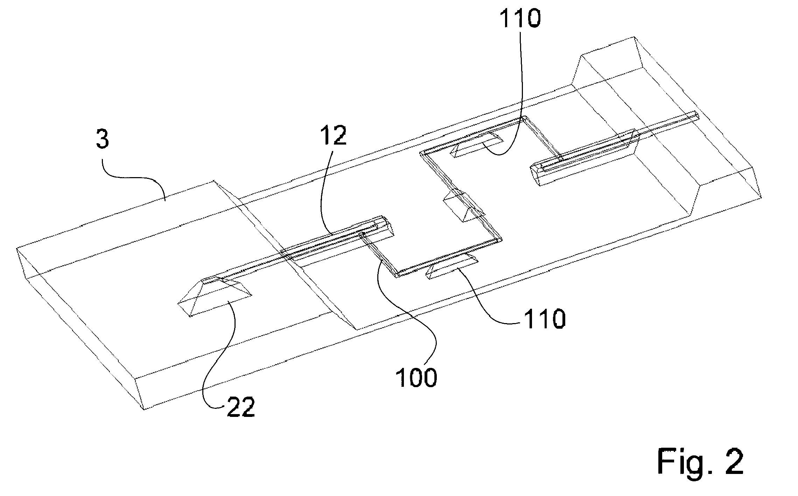

La figure 2 est une vue en perspective d'un exemple de système fluidique obtenu à l'aide du procédé de l'invention. Au-dessus de la surface d'une base en silicium 3, a été réalisé un capillaire 100, lequel se présente sous la forme d'un S. Ce capillaire est suspendu sur la plus grande partie de sa longueur et repose, en certains points, sur des îlots en silicium 110. Le capillaire 100 est relié à des canaux d'accès, tel le canal 12, qui eux-mêmes sont connectés à des ouvertures, ou réservoirs, 22. Le système fluidique de la figure 2 est obtenu à l'aide du procédé de l'invention, tel que décrit précédemment.

On comprendra aisément que bien des variantes peuvent être apportées à un tel système. Ainsi peut-on modifier la forme du capillaire et augmenter le nombre de canaux d'accès et d'ouvertures correspondantes afin de permettre l'introduction de liquides différents dans le capillaire. Est également possible, à l'aide du procédé de l'invention, la réalisation de capillaires dont une extrémité est ouverte et se termine, par exemple, par une pointe; cette dernière pouvant être dans l'axe du canal du capillaire ou perpendiculaire à celui-ci. De plus, dépendant aussi de l'application, il peut s'avérer nécessaire de prévoir des électrodes d'actuation et/ou de détection (mesure de densité de liquide dans une structure résonante ou mesure de flux par électrophorèse) qui peuvent être réalisées de manière conventionnelle. Une autre application intéressante possible est la réalisation de pipette ionique comportant, en plus d'un capillaire ouvert à une extrémité, une électrode intégrée à ce même capillaire. Des modules additionnels, tel un capteur, un circuit de mesure ou de traitement de l'information, peuvent également être intégrés sur la même base en silicium.

Enfin, le procédé de l'invention peut être utilisé pour la réalisation de systèmes variés incluant, sans limitation, les micropipettes à capillaire ou autres dispensateurs capables de transporter des quantités infimes de substances liquides, tels de l'encre ou des échantillons biologiques, d'un réservoir vers un substrat donné, réalisant ainsi une écriture à l'échelle nanométrique.

Bien que la présente invention ait été décrite en relation avec des exemples de réalisation particuliers, on comprendra qu'elle est susceptible de modifications ou variantes sans pour autant sortir de son domaine.

## Revendications

1. Procédé de fabrication d'un système fluidique comportant au moins un capillaire, **caractérisé en ce qu'**il consiste à:
- réaliser, à la surface d'une première plaquette (1) de silicium, au moins une première gorge (10) de dimensions données,
- réaliser dans une deuxième plaquette (2) de silicium au moins une ouverture traversante,
- réaliser, par fusion, un assemblage (3) desdites première et deuxième plaquettes de manière à former un canal qui est en contact avec ladite au moins une ouverture traversante, et
- placer ledit assemblage dans une atmosphère oxydante de façon à former une couche d'oxyde de silicium sur les parois internes dudit canal, diminuant ainsi la section de ce dernier pour créer ledit capillaire.

2. Procédé de fabrication selon la revendication 1, **caractérisé en ce qu'**au moins une deuxième gorge (11, 12) de dimensions supérieures à celles de ladite première gorge, est réalisée à la surface de la première plaquette et reliée à ladite première gorge et **en ce que** ledit assemblage est réalisé de manière à mettre en contact au moins une desdites ouvertures traversantes avec une extrémité de ladite deuxième gorge.

3. Procédé de fabrication selon la revendication 1 ou la revendication 2, **caractérisé en ce qu'**au moins une fenêtre est réalisée à la surface dudit assemblage en regard d'au moins une portion dudit capillaire et en ce le silicium est attaqué à travers cette fenêtre pour libérer ladite portion de capillaire.

4. Système fluidique **caractérisé en ce qu'**il est obtenu à l'aide du procédé selon l'une des revendications 1 à 3.

5. Système fluidique selon la revendication 4, **caractérisé en ce que** ledit capillaire présente une extrémité se terminant par une pointe ouverte.

6. Système fluidique selon la revendication 5, **caractérisé en ce que** ladite pointe ouverte est dans l'axe du canal dudit capillaire.

7. Système fluidique selon la revendication 5, **caractérisé en ce que** ladite pointe ouverte est perpendiculaire à l'axe du canal dudit capillaire.

8. Système fluidique selon l'une des revendications 4 à 7, **caractérisé en ce qu'**il comporte des électrodes intégrées.

9. Système fluidique selon la revendication 8, **caractérisé en ce que** lesdites électrodes sont utilisées pour la détection.

10. Système fluidique selon la revendication 8, **caractérisé en ce que** lesdites électrodes sont utilisées pour l'actuation d'une partie au moins dudit capillaire.
